# EUROPEAN PATENT SPECIFICATION

(11) **EP 0 889 820 B1**
(45) Date of publication and mention of the grant of the patent: **29.12.1999**
(21) Application number: 97914445.8
(22) Date of filing: 26.03.1997
(51) Int. Cl.: B62D 1/18

(54) **RAKE AND/OR REACH ADJUSTABLE STEERING COLUMN DEVICE**
NEIGUNGS- UND/ODER LÄNGENVERSTELLBARE LENKSÄULE
SYSTEME DE COLONNE DE DIRECTION REGLABLE VERTICALEMENT ET LONGITUDINALEMENT

(30) Priority: 02.04.1996 GB 9606980
(43) Date of publication of application: 13.01.1999
(73) Proprietor: Nastech Europe Limited, Coventry, Warwickshire CV4 9AE (GB)
(72) Inventor: BARTON, Laurence, George, Herbert, Leamington Warwickshire CV32 5XA (GB); BENTLEY, James, Peter, Coventry Warwickshire CV6 2GT (GB)
(74) Representative: Feakins, Graham Allan
(86) International application number: GB9700846
(87) International publication number: WO9736775

(56) References cited:
- DE-A- 4 434 820
- GB-A- 2 281 539
- US-A- 5 570 610

## Description

This invention relates to a rake and/or reach adjustable steering column device.

A rake adjustable vehicle steering column is one that can be adjusted in a vertical direction.

A reach adjustable vehicle steering column is one that can be adjusted towards or away from the front of the car, which although it is not in a strictly horizontal direction will for reference purposes and to distinguish from vertical adjustment be referred to hereafter as "horizontal" adjustment and movement in a "horizontal" direction.

In the event of a crash there is a need for columns to be locked in both the vertical and horizontal direction. Normally the vertical locking is by means of a friction clamp and this moves to its extreme setting in the event of a crash.

Examples of known adjustable vehicle steering column assemblies are shown and described in GB-A-2 281 539 and GB-A-1 546 949, the preamble of claim 1 corresponding to GB-A-2 281 539.

According to the present invention, there is provided a rake and/or reach adjustment steering column device having first means to clamp a steering column in a desired adjustment position and second means to maintain substantially the adjustment position of the device in the event of a vehicle crash, wherein the second means comprises at least one cam having an engagement surface, the cam being pivotally mounted at a cam pivot to the first means and there being at least one other engagement surface for engagement with the cam; characterised in that said at least one other engagement surface is on or fixed to a support member for the steering column and in that the engagement surface of the or each cam has one curved extremity at a greater radial distance from its cam pivot than another curved extremity of that engagement surface near the cam pivot, thereby to result in a greater engaging force as the cam rotates in one direction.

The first means can include a bolt and handle assembly which in a clamped position clamps a steering column at a vertically-adjusted location-adjusted location relative to a support member for the steering column.

The second means is a toothed cam and said at least one other engagment surface can be a rack mechanism associated with the both of the first means, the cam and rack being preferably resiliently urged together. The rack is preferably fixed to a column support bracket whereas the cam is pivotally mounted to the bolt and sprung towards the rack so that the teeth on the cam engage on the rack. Relative vertical movement between the rack and cam causes cam rotation and the teeth on the cam then lock tightly with the teeth on the rack.

A similar cam and rack arrangement can be used for horizontal and reach locking, a rack being fixed to a reach adjust bracket with a toothed cam on the same bolt.

The advantage of both locking arrangements is that the higher the load on the lock the greater the locking force.

For a better understanding of the present invention and to show how the same may be carried into effect, reference will now be made, by way of example, to the accompanying drawings, in which:-
Figure 1 is a diagrammatic end view, partly in section of a rake and reach adjustable steering column device with cam locks,
Figure 2 is a diagrammatic side view showing the camming action of the device of Figure 1,

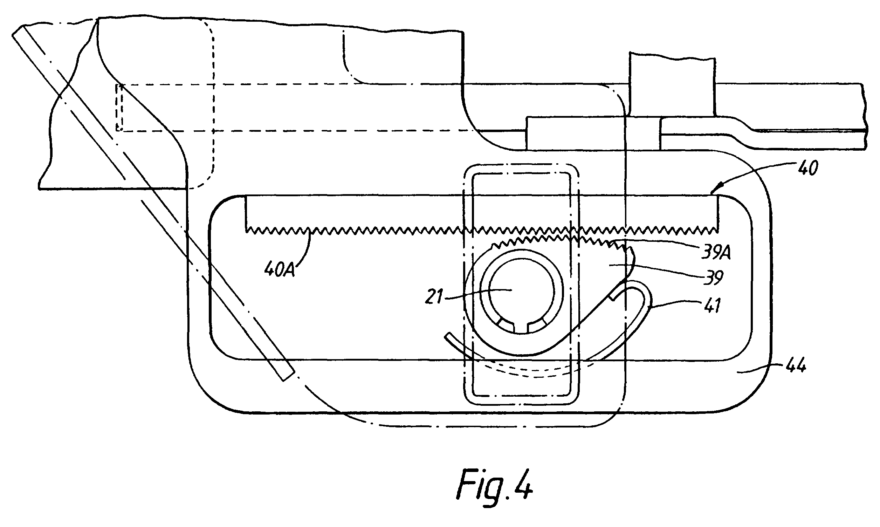

Figure 3 is a similar view to Figure 2 showing the disengagement of the camming action of the device of Figure 1, and
Figure 4 is a side view of the device of Figure 1 showing the camming action of a reach cam lock.

Referring to the drawings, a vehicle steering column device generally shown at 25 includes a clamping bolt 26 which passes through slots in respective flanges of the steering column support bracket 23 and is clamped in position by means of a clamping handle 27 which acts on, for example, washers 28 to clamp or unclamp the steering column 21 relative its support bracket 23. Other forms of clamping means can be used instead.

In order to maintain substantially the adjustment position of the device 25 a toothed cam 29 is engageable with a vertical toothed or serrated locking rack 30 fixed by welding or whatever to the bracket 23. This arrangement may be duplicated on the other side of the column with cam 29' and rack 30'.

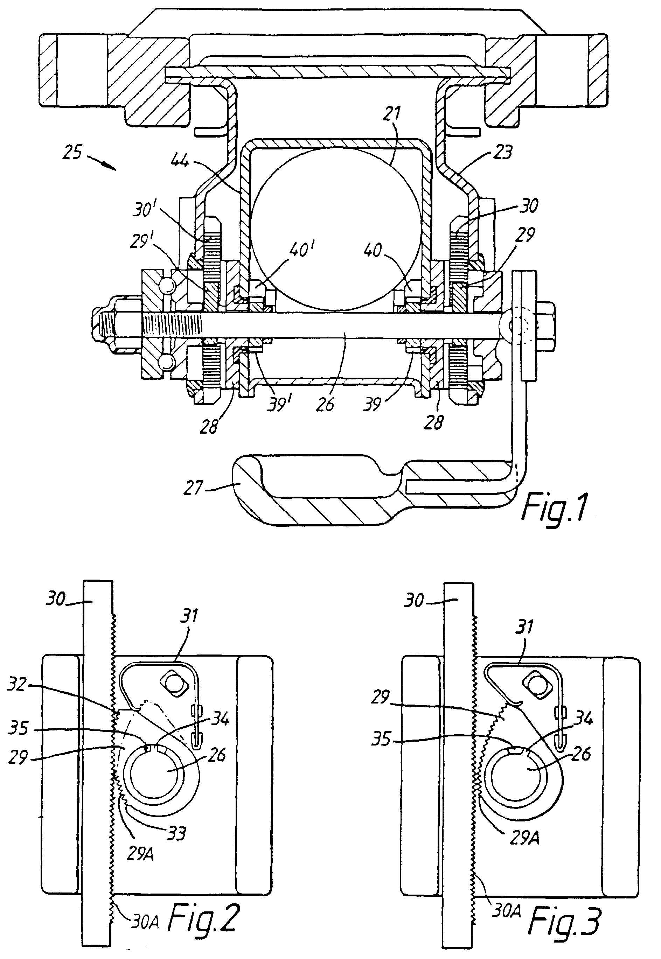

As seen in Figure 2 the cam 29 (29') is urged towards the rack 30 (30') by a spring 31. The cam 29 has serrations or teeth 29A which are urged by the spring 31 onto the teeth 30A of the vertical rack 30.

The teeth 29A, 30A are normally engaged but by the action of spring and clearly the "pear" shape of the cam with the engagement surface carrying the teeth 29A at an extremity 32 being at a greater radial distance than the teeth on the engaging surface of an extremity 33 near the cam pivot results in a greater engaging force as the cam rotates, thereby producing a jamming effect. The load and locking are thus self-generating.

To disengage the cam the handle 27 rotates the bolt 26 causing a key 34 in a keyway 35 to rotate the cam 29 clockwise out of engagement.

The reach lock is similar with a cam 39 engaging with a serrated "horizontal" rack 40 under influence of a spring 41. The rack 40 is fixed to a reach adjustment bracket 44. The cam 39 pivots on bolt 21 and cam teeth 39A engages with rack teeth 40A in the same way as the rake adjustment. The cam 39 is similar in shape and action to the cam 29.

Instead of teeth or serrations on the cams and/or racks, one or both of the engagement surfaces of the cams and racks can be provided with a substantially smooth surface such as a fine blasted surface.

## Claims

1. A rake and/or reach adjustment steering column device (25) having first means (26, 27) to clamp a steering column (21) in a desired adjustment position and second means (29, 30) to maintain substantially the adjustment position of the device in the event of a vehicle crash, wherein the second means comprises at least one cam (29) having an engagement surface (29A), the cam being pivotally mounted at a cam pivot to the first means and there being at least one other engagement surface (30A) for engagement with the cam (29); characterised in that said at least one other engagement surface (30A) is on or fixed to a support member (23) for the steering column and in that the engagement surface (29A) of the or each cam has one curved extremity (32) at a greater radial distance from its cam pivot than another curved extremity (33) of that engagement surface near the cam pivot, thereby to result in a greater engaging force as the cam rotates in one direction.

2. A device according to claim 1, wherein the first means includes a bolt (26) and handle (27) assembly which in a clamped position clamps a steering column (21) in the adjustment position at a vertically and/or horizontally adjusted location relative to said support member (23) for the steering column.

3. A device according to claim 2, wherein the or each cam (29) is mounted on the bolt of the bolt and handle assembly.

4. A device according to claim 1, 2 or 3, wherein the or each cam (29) is toothed or serrated.

5. A device according to any one of the preceding claims, wherein said at least one other engagement surface is a toothed rack (30).

6. A device according to any one of the preceding claims, wherein said at least one cam (29) and said at least one other engagement surface (30) are resiliently urged together.

7. A vehicle steering column assembly incorporating a device according to any one of the preceding claims.

## Patentansprüche

1. Neigungs- und/oder längenverstellbare Lenksäulenvorrichtung (25) mit einer ersten Einrichtung (26, 27) zum Klemmen einer Lenksäule (21) in einer gewünschten Einstellposition und einer zweiten Einrichtung (29, 30) zum Aufrechterhalten im wesentlichen der Einstellposition der Vorrichtung für den Fall eines Fahrzeugcrashs, wobei die zweite Einrichtung wenigstens einen Nocken (29) aufweist, der eine Eingriffsoberfläche (29A) hat, wobei der Nocken schwenkbar an einem Nockengelenk an der ersten Einrichtung angebracht ist und wobei wenigstens eine andere Eingriffsoberfläche (30A) zum Eingriff mit dem Nocken (29) vorhanden ist, **dadurch gekennzeichnet,** daß die wenigstens eine andere Eingriffsoberfläche (30A) an einem Stützglied (23) für die Lenksäule ausgebildet oder daran befestigt ist und daß die Eingriffsoberfläche (29A) des Nockens oder jedes der Nocken eine gekrümmte Extremität (32) mit einem größeren radialen Abstand von seinem Nockengelenk als eine andere gekrümmte Extremität (33) dieser Eingriffsoberfläche nahe dem Nockengelenk hat, wodurch sich eine größere Eingriffskraft ergibt, wenn der Nocken in einer Richtung verdreht wird.

2. Vorrichtung nach Anspruch 1, bei der die erste Einrichtung eine Anordnung aus Bolzen (26) und Handgriff (27) aufweist, die in einer Klemmposition eine Lenksäule (21) in der Einstellposition mit einer lotrecht und/oder waagerecht eingestellten Stellung relativ zu dem Stützglied (23) für die Lenksäule klemmt.

3. Vorrichtung nach Anspruch 2, bei der der oder jeder Nocken (29) an dem Bolzen der Anordnung aus Bolzen und Handgriff angebracht ist.

4. Vorrichtung nach Anspruch 1, 2 oder 3, bei der der oder jeder Nocken (29) verzahnt oder geriffelt ist.

5. Vorrichtung nach einem der vorhergehenden Ansprüche, bei der die wenigstens eine andere Eingriffsoberfläche eine Zahnstange (30) ist.

6. Vorrichtung nach einem der vorhergehenden Ansprüche, bei der der wenigstens eine Nocken (29) und die wenigstens eine andere Eingriffsoberfläche (30) nachgiebig aufeinander zu gespannt sind.

7. Lenksäulenanordnung für ein Fahrzeug mit einer Vorrichtung nach einem der vorhergehenden Ansprüche.

## Revendications

1. Dispositif de colonne de direction à réglage en hauteur et/ou en profondeur (25) ayant des premiers moyens (26, 27) destinés à serrer une colonne de direction (21) dans une position de réglage souhaitée et des deuxièmes moyens (29, 30) destinés à maintenir sensiblement la position de réglage du dispositif dans le cas d'un accident de véhicule, les deuxièmes moyens comportant au moins une came (29) ayant une surface d'engagement (29A), la came étant montée de façon pivotante autour d'un pivot de came sur les premiers moyens et au moins une autre surface d'engagement (30A) étant prévue pour engagement avec la came (29); caractérisé en ce que ladite au moins une autre surface d'engagement (30A) est sur ou fixée sur un élément de support (23) pour la colonne de direction et en ce que la surface d'engagement (29A) de la ou de chaque came possède une extrémité courbe (32) à une distance radiale plus grande de son pivot de came qu'une autre extrémité courbe (33) de cette surface d'engagement proche du pivot de came, avec ainsi pour résultat une force d'engagement plus grande lorsque la came tourne dans un sens.

2. Dispositif selon la revendication 1, dans lequel les premiers moyens comprennent un ensemble à boulon (26) et poignée (27) qui, dans une position serrée, serre une colonne de direction (21) dans la position de réglage dans un emplacement réglé verticalement et/ou horizontalement par rapport au dit élément de support (23) pour la colonne de direction.

3. Dispositif selon la revendication 2, dans lequel la ou chaque came (29) est montée sur le boulon de l'ensemble à boulon et poignée.

4. Dispositif selon la revendication 1, 2 ou 3, dans lequel la ou chaque cane (29) est dentée ou crantée.

5. Dispositif selon l'une quelconque des revendications précédentes, dans lequel ladite au moins une autre surface d'engagement est une crémaillère dentée (30).

6. Dispositif selon l'une quelconque des revendications précédentes, dans lequel ladite au moins une came (29) et ladite au moins une autre surface d'engagement (30) sont poussées élastiquement ensemble.

7. Ensemble de colonne de direction de véhicule incorporant un dispositif selon l'une quelconque des revendications précédentes.
